(19) Europäisches Patentamt
European Patent Office
Office européen des brevets

(11) **EP 2 081 092 A1**

(12) **EUROPÄISCHE PATENTANMELDUNG**

(43) Veröffentlichungstag:
**22.07.2009 Patentblatt 2009/30**

(51) Int Cl.:
**G05B 13/04** (2006.01)

(21) Anmeldenummer: **09150079.3**

(22) Anmeldetag: **06.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **21.01.2008 DE 102008005712**

(71) Anmelder: **Volkswagen AG**
**38436 Wolfsburg (DE)**

(72) Erfinder:
• **Theobald, Dr. Jörg**
**38165, Lehre (DE)**
• **Schewik, Martin**
**38104, Braunschweig (DE)**

(74) Vertreter: **Gulde Hengelhaupt Ziebig & Schneider**
**Patentanwälte - Rechtsanwälte**
**Wallstrasse 58/59**
**10179 Berlin (DE)**

(54) **Verfahren und Anordnung zur Steuerung von Motoren sowie ein entsprechendes Computerprogramm und ein entsprechendes computerlesbares Speichermedium**

(57) Die Erfindung betrifft ein Verfahren und eine Anordnung zur Steuerung von Motoren sowie ein entsprechendes Computerprogramm und ein entsprechendes computerlesbares Speichermedium, welche insbesondere einsetzbar sind für eine optimierte Steuerung von Verbrennungsmotoren wie beispielsweise von direkteinspritzenden Ottomotoren.

Es ist vorgesehen, dass zur Steuerung von Motoren das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

Figur 4

**Beschreibung**

Die Erfindung betrifft ein Verfahren und eine Anordnung zur Steuerung von Motoren sowie ein entsprechendes Computerprogramm und ein entsprechendes computerlesbares Speichermedium, welche insbesondere einsetzbar sind für eine optimierte Steuerung von Verbrennungsmotoren wie beispielsweise von direkteinspritzenden Ottomotoren.

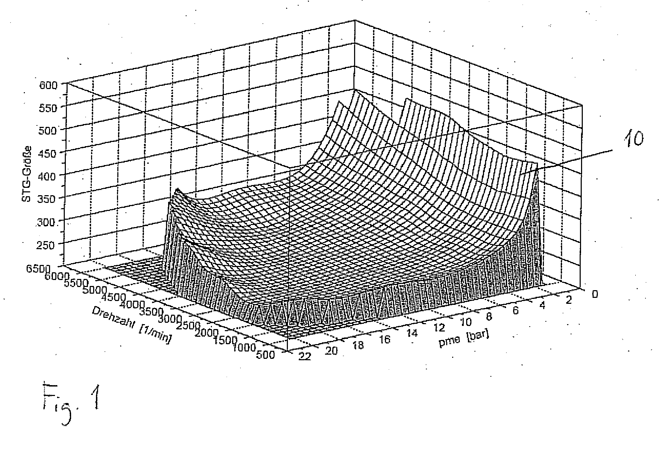

Verbrennungsmotoren werden herkömmlicherweise zentral von einem Steuergerät (STG) angesteuert. Dabei werden nach dem Stand der Technik Ausgabewerte des STG an die Aktuatoren unter Berücksichtigung einer Vielzahl von Parameters derart erzeugt, dass z.B. der Betriebspunkt des Motors erkannt und mit Hilfe von im STG in elektronischer Form abgelegten Kennfelder bzw. Kennlinien ein Ausgabewert berechnet wird. In diesen Kennfeldern bzw. Kennlinien sind Größen in diskreten Schritten abgelegt. Eine beispielhafte Darstellung eines solchen Kennfeldes ist in Figur 1 gegeben.

Wenn in Abhängigkeit von den Eingangsgrößen eine solche Stützstelle nicht exakt getroffen wird - und das ist beim dynamischen Motorbetrieb unter den verschiedenen äußeren Verhältnissen die Regel -, muss zur Bestimmung von Ausgangsgrößen interpoliert werden. Durch die Vielzahl an funktionalen Verknüpfungen zwischen einzelnen STG-Größen, die wie beschrieben durch Interpolation in entsprechenden Kennfelder berechnet wurden, kommt es bei der letztlich an einen Aktuator ausgegebenen Ausgangsgröße zu Ungenauigkeiten, die wiederum dazu führen, dass ein Motor nicht bestmöglich, sondern suboptimal betrieben wird. Höherer Kraftstoffverbrauch und höhere Abgasemissionen sind die Folge.

Diese Kennfelder werden während der Entwicklung des Motors einmalig bedatet und gelten im Anschluss für alle in Serie produzierten Motoren dieses Typs. Bei dieser Bedatung wird im Motorversuch jeder einzelnen Stützstelle in einem Kennfeld ein Wert zugeordnet. Sind die Gradienten zwischen den Stützstellen groß, so ist der Fehler bei der Interpolation zwischen den Stützstellen zur Ermittlung der Parameter relativ groß. Infolgedessen werden für den real anliegenden Betriebspunkt, der in der Regel von den Stützstellen-Koordinaten verschieden ist, nicht die optimalen Parameter eingestellt. Zudem sind Wechselwirkungen unter den Größen, die in den Kennfeldern abgelegt sind, herkömmlicherweise nicht berücksichtigt. In einem vieldimensionalen Parameterraum werden somit aus den zweidimensionalen Kennfeldern ausgelesenen Parametern für einen Betriebspunkt selten die optimalen Motoreinstellungen getroffen. Wie erwähnt, kann ein suboptimaler Verbrauch die Folge sein.

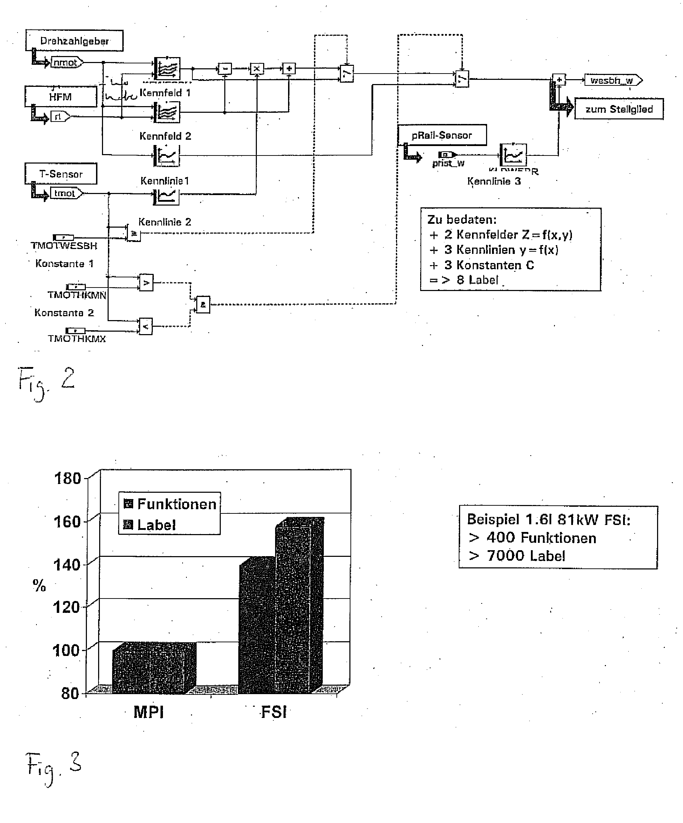

In Figur 2 ist ein typischer Aufbau einer STG-Funktionalität dargestellt. Wie dieser Darstellung zu entnehmen ist, sind in diesem Beispiel zwei Kenndatenfelder für die Parameter Drehzahl (nmot) und Widerstandswert (rl) aus einem Heißfilmanemometer (HFM) zu bedaten. Weiterhin sind drei Kennlinien für bestimmte Parameter, wie z.B. Motortemperatur (tmot), zu bedaten und drei Konstanten zu berücksichtigen. Dies führt in diesem einfachen Beispiel zu mindestens acht Labeln. Tatsächlich aber ist eine weitaus höhere Komplexität zu bewältigen, die beispielsweise in der Größenordnung von über 400 Funktionen und mehr als 7000 Labeln liegt (vgl. Figur 3).

Aufgrund dieser Steuergerätearchitektur kommt es insbesondere bei direkteinspritzenden Ottomotoren - eventuell zusätzlich noch mit Aufladung - in Kombination mit den immer umfangreicher werdenden Anforderungen zur Abgasnachbehandlung sowie zur Onboard-Diagnose zu einer drastischen Komplexitätserhöhung (vgl. Figur 3), so dass Kombinationen von Ungenauigkeiten in der Interpolation der Stützstellen für mehrere Parameter erhebliche negative Auswirkungen haben können.

Der Erfindung liegt daher die Aufgabe zugrunde, ein Verfahren und eine Anordnung zur Steuerung von Motoren sowie ein entsprechendes Computerprogramm und ein entsprechendes computerlesbares Speichermedium bereitzustellen, welche die Nachteile der bekannten Lösungen beheben sowie insbesondere Fehler zu reduzieren, welche durch Wechselwirkungen von Ausgangsgrößen entstehen.

Die Aufgabe wird erfindungsgemäß durch die Merkmale in den Ansprüchen 1, 7, 10 und 11 gelöst. Zweckmäßige Ausgestaltungen der Erfindung sind in den Unteransprüchen enthalten.

Erfindungsgemäß wird das Verhalten eines Verbrennungsmotors nicht in herkömmlicher Weise in Form diverser Kennfelder beschrieben sondern durch ein Motormodell. Dabei wird das Motorverhalten zumindest teilweise mathematisch modelliert, um die erforderlichen Ausgangsgrößen für die Motorsteuerung zu ermitteln. Vorzugsweise wird ein mathematisches Modell des gesamten Motorverhaltens genutzt, welches für die zu ermittelnden Ausgangsgrößen relevant ist. Erfindungsgemäß ist vorgesehen, dass in dem Modell Abhängigkeiten zwischen Eingangs- und Ausgangsgrößen durch mathematische Formeln ausgedrückt werden. Durch Auswertung dieser Formeln werden die Ausgangsgrößen in Abhängigkeit von den Eingangsgrößen berechnet. Die Ausgangsgrößen können dabei die analytische Auswertung der Formeln, d.h. durch direkte Berechnung, ermittelt werden, oder aber durch Methoden der numerischen Mathematik näherungsweise, wobei Werte für die Genauigkeit dieser näherungsweisen Berechnung, d.h. ein Fehlerrest, vorgegeben werden können.

In einer bevorzugten Ausführungsform ist dieses Motormodell physikalisch basiert. Dabei werden physikalische Vorgänge, welche das Motorverhalten beeinflussen, modelliert.

Eine andere bevorzugte Ausführungsform sieht als Motormodell ein mehrdimensionales Polynommodell vor, die beispielsweise durch statistische Versuchsplanung ermittelt werden. Eine andere bevorzugte Ausführungsform sieht vor, beide Modelle miteinander zu kombinieren. Ein solches Polynommodell des Motorverhaltens kann beispielsweise mit Hilfe einer statistischen Versuchsplanung aufgestellt werden.

Diese Motormodelle beschreiben das Motorverhalten in physikalischen und mathematischen Zusammenhängen, indem verschiedene Eingangsgrößen über mathematische Beziehungen miteinander verknüpft werden, welche das Motorverhalten abbilden. Insbesondere werden durch die mathematischen Beziehungen die dem Motorverhalten zugrundeliegenden die physikalischen Vorgänge abgebildet. Mit Hilfe dieser mathematischen Beziehungen werden aus den verschiedenen Eingangsgrößen eine oder mehrere Ausgangsgrößen berechnet.

Durch eine möglichst umfassende Beschreibung des Motorverhaltens kann daher bei Einsatz der Erfindung ein globales Optimum der Motoreinstellparameter genauer gefunden werden. Eine fehlerbehaftete Interpolation zwischen Schlitzstellen eines Kennfeldes sowie eine Vervielfachung dieser Ungenauigkeiten durch Kombination solcher Parameter wird durch die Erfindung vermieden. Die Genauigkeit der Motorapplikation steigt und die Komplexität der STG-Funktionalitäten sinkt.

In einer bevorzugten Ausführungsform der Erfindung ist vorgesehen, dass in dem Modell des Motorverhaltens eine oder mehrere Zielfunktionen $Z_k$ ausgewertet werden. Durch diese Zielfunktionen werden erste Parameter beschrieben, an denen das Motorverhalten ausgerichtet werden soll. Ein solcher erster Parameter kann der Kraftstoffverbrauch sein, wobei der Motor durch die erfindungsgemäße Steuerung so gesteuert werden soll, dass der Kraftstoffverbrauch minimiert wird. Die mindestens eine Zielfunktion $Z_k = f(E_i)$ (i = 1, 2, ... , n) kann von zumindest einem zweiten $E_i$ Parameter abhängen. Bei diesen zweiten Parametern kann es sich um Ausgangsgrößen handeln, die von der Steuerung des Motors ausgegeben werden, wie beispielsweise Zündzeitpunkt oder Abgasrückführung. Diese Zielfunktionen werden derart ausgewertet, dass als Ausgangsgrößen solche Werte bestimmt werden, für welche die Zielfunktion eine vorgegebene Bedingung erfüllt. Bei einer solchen Bedingung kann es sich um die Minimierung der Zielfunktion handeln. Beispielsweise werden in einer beispielhaften Ausführungsform die Ausgangsgrößen Zündzeitpunkt oder Abgasrückführung derart bestimmt, dass der Kraftstoffverbrauch minimiert wird.

Für die Steuerung des Motors können beispielsweise durch ein erfindungsgemäßes Steuerverfahren folgende Eingangsgrößen verarbeitet und ausgewertet werden:

- angesaugter Luftmassenstrom,
- Winkel- und/oder Drehzahl von Kurbel. Oder Nockenwelle,
- barometrischer Umgebungsluftdruck,
- Kraftstoffdruck,
- Temperatur der Motorkühlflüssigkeit,
- Temperatur der angesaugten Luft,
- Motorlast,
- Motortemperatur,
- Drosselklappenwinkel,
- Daten einer Lambdasonde,
- Luftmasse und/oder
- Drehzahl.

Darüber hinaus können auch Bedienersignale, wie z.B. Gaspedalwinkel oder Bremssignal o.dgl., als Eingangsgrößen ausgewertet werden.

Als Ausgangsgrößen zur Steuerung des Motors können beispielsweise folgende Parameter modellbasiert bestimmt werden:

- Zündzeitpunkt und Zündenergie,
- Einspritzzeitpunkt und Einspritzmenge,
- Drosselklappenstellung,
- Ladungsbewegungsklappen,
- Nockenwellenverstellung,
- Abgasrückführung,
- Tankentlüftungsventil,
- Kompressoransteuerung und/oder
- Turbolader Waste-Gate-Ansteuerung.

Eine Anordnung zur Steuerung von Motoren nach der Erfindung umfasst mindestens eine Datenverarbeitungseinrichtung, wobei die Anordnung derart eingerichtet ist, dass die Steuerung von Motoren erfolgt, indem das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird. Insbesondere ist die Datenverarbeitungseinrichtung so programmiert, dass ein Verfahren gemäß einem der Ansprüche 1 bis 6 ausführbar ist.

In einer bevorzugten Ausführungsform der Erfindung ist die Anordnung als Motorsteuergerät ausgebildet.

Eine weitere bevorzugte Ausführungsform der Erfindung sieht vor, dass die Anordnung Schnittstellen zu anderen Geräten, wie z.B. einem Getriebesteuergerät, einem Antiblockiersteuergerät, einem elektronischen Stabilitätsprogramm o.dgl., aufweist.

Vorzugsweise sind die verschiedenen Geräte über einen Fahrzeugbus, wie z.B. einen Controller Area Network Bus (CAN-Bus), miteinander vernetzt.

Ein erfindungsgemäßes Computerprogramm ermöglicht es einer Datenverarbeitungseinrichtung, nachdem es in den Speicher der Datenverarbeitungseinrichtung geladen worden ist, ein Verfahren zur Steuerung von Motoren durchzuführen, wobei das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 10 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Motorsteuerung durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Steuerung von Motoren durchzuführen, wobei das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:

Fig. 1    ein beispielhaftes Kennfeld nach dem Stand der Technik;

Fig. 2    Beispiel eines typischen Aufbaus eines STG-Funktionalität (© Bosch) nach dem Stand der Technik;

Fig. 3    Veranschaulichung der Komplexitätserhöhung bei Direkteinspritzung (Fuel Stratified Injection, FSI) vs. Mehrpunkteinspritzung (Multi Point Injection, MPI) und

Fig. 4    ein beispielhaftes Diagramm zur Darstellung der Abhängigkeit des Verbrauchs von den Werten der Abgasrückführung (AGR) und des Zündzeitpunkts.

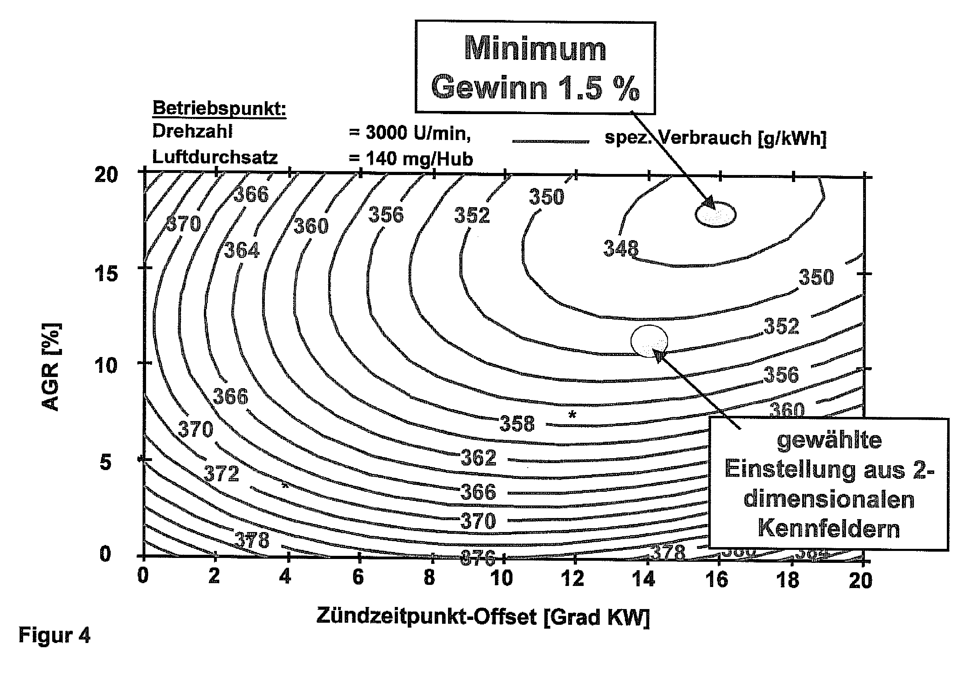

An Figur 4 soll beispielhaft die Verbesserung der Motorsteuerung erläutert werden, wie sie durch die Erfindung ermöglicht wird.

Figur 4 stellt die Abhängigkeit des Verbrauchs von den Werten der Abgasrückführung (AGR) und des Zündzeitpunkts dar. In Abhängigkeit vom Betriebspunkt des Motors werden diese Werte nach dem Stand der Technik interpoliert. Durch die Interpolation in den diskreten Kennfeldern 10, welche im herkömmlichen Steuergerät für die Abgasrückführung bzw. den Zündzeitpunkt abgelegt sind, werden in diesem Beispiel für die Abgasrückführung etwa 12% und für den Zündzeitpunkt offset ca. 14°KW ermittelt. Diese durch Interpolation gewonnenen Werte für Abgasrückführung und Zündzeitpunkt sind fehlerhaft, d.h., diese Werte führen zu einem erhöhten Kraftstoffverbrauch. Zudem addieren sich die Fehler, die auf der Interpolation beruhen. Die angestrebte Zielfunktion, hier die Minimierung des Kraftstoffverbrauchs, kann somit mit herkömmlichen Methoden unter Verwendung von Kennfeldern 10 gegebenenfalls überhaupt nicht erreicht werden.

Zu beachten ist dabei, dass in den herkömmlichen Steuergeräten nur zweidimensionale Kennfelder 10 für Ausgangsgrößen verwendet werden. Jede Ausgangsgröße wird herkömmlicherweise durch ein Kennfeld 10 bestimmt. Die Ungenauigkeit dieser unabhängig voneinander bestimmten Ausgangsgrößen vergrößern sich in der Regel.

Im Gegensatz dazu stellt die Erfindung die Möglichkeit bereit, durch die Modellierung der physikalischen Vorgänge und/oder durch Lösung der polynomen Gleichungen die Zielfunktion, d.h. hier die Minimierung des Kraftstoffverbrauchs, beliebig genau zu erreichen.

Eine solche Zielfunktion kann beispielsweise die folgende Gestalt haben:

$$Z_k = f(E_i) \qquad \text{bzw. } Z_k = f(E_i, E_x)$$

$$Z_k = c_0 \tag{i}$$

$$+ c_1 * E_1 + c_2 * E_2 + c_3 * E_3 + \ldots \tag{ii}$$

$$+ c_{12} * E_1 * E_2 + c_{13} * E_1 * E_3 + \ldots + c_{23} * E_2 * E_3 + \ldots \tag{iii}$$

$$+ c_{11} * E_1^2 + c_{22} * E_2^2 + c_{33} * E_3^2 + \ldots \tag{iv}$$

$$+ \ldots$$
$$+ \text{Rest} \tag{v}$$

Dabei stellen

$Z_i$ die Zielfunktion, wie beispielsweise Kraftstoffverbrauch,
$c_i$ Konstanten,
$E_i$ Parameterwerte, wie z.B. Werte für Abgasrückführung, Zündzeitpunkt, Heißfilmanemometer o.dgl.

dar.

Ein solches Polynom berücksichtigt konstante (i), lineare (ii) und quadratische (iv) Einflüsse auf das Motorverhalten, sowie Einflüsse auf das Motorverhalten, die durch Wechselwirkungen (iii) der Parameterwerte auftreten.

Insbesondere treten hier die Ausgangsgrößen wie beispielsweise Abgasrückführung oder Zündzeitpunkt nicht unabhängig voneinander auf, sondern gehen gemeinsam als Parameter $E_i$ bzw. $E_j$ in die Zielfunktion ein.

Das Restglied (v) enthält Terme höherer Ordnung, zufällige Schwankungen, nichtberücksichtigte Einflüsse o.dgl. Das Restglied kann in seiner Größe festgelegt werden, so dass damit der maximale Fehler für die Zielfunktion vorgegeben werden kann. Je mehr Terme höherer Ordnung in dem Polynom für die Zielfunktion $Z_k$ berücksichtigt werden, desto kleiner wird der Fehler.

Hier wird deutlich, dass sich bei Nutzung des erfindungsgemäßen Verfahrens bzw. der erfindungsgemäßen Anordnung der Fehler der Zielfunktion genau vorgeben lässt. Dadurch, dass mehrere Ausgangsgrößen in die Zielfunktion eingehen, wird vermieden, dass sich Fehler ungewollt summieren, wie es bei der unabhängigen Ermittlung der Ausgangsgrößen bei den herkömmlichen Lösungen der Fall ist.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

**Patentansprüche**

1. Verfahren zur Steuerung von Motoren,
   **dadurch gekennzeichnet, dass**
   das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

2. Verfahren nach Anspruch 1,
   **dadurch gekennzeichnet, dass**

physikalische Vorgänge, welche das Motorverhalten beeinflussen, modelliert werden.

3. Verfahren nach Anspruch 1 oder 2,
   **dadurch gekennzeichnet, dass**
   das Modell mindestens eine Zielfunktion $Z = f(E_i)$ $(i = 1, 2, ..., n)$ für mindestens einen vorgebbaren ersten Parameter $Z$ umfasst, wobei die mindestens eine Zielfunktion $f(E_i)$ von zumindest einem zweiten Parameter $E_i$ abhängt, und als Ausgangsgrößen Werte für den zumindest einen zweiten Parameter $E_i$ ermittelt werden, für die die mindestens eine Zielfunktion $f(E_i)$ mindestens eine vorgebbare Bedingung erfüllt.

4. Verfahren nach Anspruch 3,
   **dadurch gekennzeichnet, dass**
   die mindestens eine vorgebbare Bedingung in der Minimierung der mindestens eine Zielfunktion $f(E_i)$ verlangt.

5. Verfahren nach einem der voranstehenden Ansprüche,
   **dadurch gekennzeichnet, dass**
   die Modellierung des Motorverhaltens Wechselwirkungen zwischen den Eingangsgrößen und/oder Ausgangsgrößen abbildet.

6. Verfahren nach einem der voranstehenden Ansprüche,
   **dadurch gekennzeichnet, dass**
   wenigstens ein Teil der Formeln durch mehrdimensionale Polynome definiert sind.

7. Anordnung zur Steuerung von Motoren, wobei
   die Anordnung eine Datenverarbeitungseinrichtung umfasst, und wobei die Anordnung derart eingerichtet ist, dass die Steuerung von Motoren erfolgt, indem das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

8. Anordnung nach Anspruch 7,
   **dadurch gekennzeichnet, dass**
   die Anordnung als Motorsteuergerät ausgebildet ist.

9. Anordnung nach Anspruch 7 oder 8,
   **dadurch gekennzeichnet, dass**
   die Anordnung Schnittstellen zu anderen Geräten aufweist.

10. Computerprogramm, das es einer Datenverarbeitungseinrichtung ermöglicht, nachdem es in Speichermittel der Datenverarbeitungseinrichtung geladen worden ist, ein Verfahren zur Steuerung von Motoren durchzuführen, wobei das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

11. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Steuerung von Motoren durchzuführen, wobei das Motorverhalten wenigstens teilweise mathematisch modelliert wird, wobei das Modell des Motorverhaltens Abhängigkeiten zwischen Ausgangsgrößen und Eingangsgrößen durch mathematische Formeln definiert, und zumindest ein Teil der Ausgangsgrößen durch Auswertung dieser Formeln ermittelt wird.

12. Verfahren, bei dem ein Computerprogramm nach Anspruch 10 aus einem elektronischen Datennetz, wie beispielsweise aus dem Internet, auf eine an das Datennetz angeschlossene Datenverarbeitungseinrichtung heruntergeladen wird.

Fig. 1

Fig. 2

Fig. 3

Figur 4

Europäisches Patentamt
European Patent Office
Office européen des brevets

# EUROPÄISCHER RECHERCHENBERICHT

Nummer der Anmeldung

EP 09 15 0079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 1 600 322 A (NISSAN MOTOR [JP])<br>30. November 2005 (2005-11-30)<br>* Absatz [0036] - Absatz [0039] *<br>----- | 1-5,7,8,<br>10,11<br>6 | INV.<br>G05B13/04 |
| Y | US 2007/288213 A1 (SCHANTL RAINER [AT] ET AL) 13. Dezember 2007 (2007-12-13)<br>* Absatz [0236] *<br>----- | 6 | |
| X | US 2003/061004 A1 (DISCENZO FREDERICK M [US]) 27. März 2003 (2003-03-27)<br>* Absatz [0087] - Absatz [0093] *<br>----- | 1,10,11 | |

**RECHERCHIERTE SACHGEBIETE (IPC)**

G05B
F02D

Der vorliegende Recherchenbericht wurde für alle Patentansprüche erstellt

| Recherchenort | Abschlußdatum der Recherche | Prüfer |
|---|---|---|
| Den Haag | 16. März 2009 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 15 0079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2009

| Im Recherchenbericht angeführtes Patentdokument | Datum der Veröffentlichung | Mitglied(er) der Patentfamilie | Datum der Veröffentlichung |
|---|---|---|---|
| EP 1600322 A | 30-11-2005 | JP 2005339241 A<br>US 2005267608 A1 | 08-12-2005<br>01-12-2005 |
| US 2007288213 A1 | 13-12-2007 | WO 2006007621 A2<br>DE 112005001710 A5 | 26-01-2006<br>26-06-2008 |
| US 2003061004 A1 | 27-03-2003 | US 2004267395 A1<br>US 7050873 B1 | 30-12-2004<br>23-05-2006 |

EPO FORM P0461

Für nähere Einzelheiten zu diesem Anhang : siehe Amtsblatt des Europäischen Patentamts, Nr.12/82